(19) Europäisches Patentamt
European Patent Office
Office européen des brevets

(11) **EP 3 330 521 B1**

(12) **FASCICULE DE BREVET EUROPEEN**

(45) Date de publication et mention
de la délivrance du brevet:
**05.05.2021 Bulletin 2021/18**

(21) Numéro de dépôt: **17196967.8**

(22) Date de dépôt: **18.10.2017**

(51) Int Cl.:
*F02D 41/02* (2006.01)   *F01N 3/08* (2006.01)
*F02D 41/40* (2006.01)   *F02M 26/05* (2016.01)
*F02D 33/02* (2006.01)   *F02D 21/08* (2006.01)
*F01N 9/00* (2006.01)   *F02B 37/18* (2006.01)
*F02B 37/24* (2006.01)   *F02D 41/10* (2006.01)
*F02D 23/02* (2006.01)

(54) **PROCÉDÉ DE PURGE D'UN PIÈGE À OXYDES D'AZOTE D'UN MOTEUR À COMBUSTION INTERNE**

VERFAHREN ZUR REGENERIERUNG EINER STICKOXIDFALLE EINES VERBRENNUNGSMOTORS

METHOD FOR PURGING A NITROGEN OXIDE TRAP OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.10.2016 FR 1660063**

(43) Date de publication de la demande:
**06.06.2018 Bulletin 2018/23**

(73) Titulaire: **RENAULT s.a.s.**
**92100 Boulogne-Billancourt (FR)**

(72) Inventeurs:
• **LEITE, Hernani**
**91320 Wissous (FR)**
• **JALLAGEAS, Etienne**
**91220 Bretigny Sur Orge (FR)**

(56) Documents cités:
**DE-A1- 19 847 874    FR-A1- 2 986 035**
**FR-A1- 3 029 974    US-A1- 2003 089 103**
**US-A1- 2012 185 153    US-A1- 2016 084 134**

**Description**

L'invention concerne un procédé de purge d'un piège à oxydes d'azote d'un moteur à combustion interne. Elle concerne également un dispositif de motorisation pour la mise en œuvre d'un tel procédé, plus particulièrement un dispositif de motorisation d'un véhicule automobile comprenant un moteur diesel et un piège à oxydes d'azote monté à l'échappement du moteur.

ETAT DE LA TECHNIQUE

De nombreux moteurs modernes à combustion interne, plus particulièrement les moteurs diesel des véhicules automobiles, sont équipés à l'échappement d'un piège à oxydes d'azote (NOx trap selon son acronyme en langue anglaise).

Un tel piège permet de diminuer les rejets dans l'atmosphère des émissions d'oxydes d'azote provenant des gaz de combustion d'un moteur, et ainsi de respecter les normes légales qui limitent les émissions à l'échappement d'espèces polluantes par les véhicules automobiles. Par exemple, la norme européenne dite « euro6b » limite les émissions d'oxydes d'azote des véhicules équipés d'un moteur diesel à 80 milligrammes par kilomètre parcouru, sur le cycle dit « NEDC ».

De manière connue, un piège à oxydes d'azote fonctionne de manière séquentielle : pendant le fonctionnement habituel du moteur en mélange pauvre, il stocke une fraction plus ou moins importante des oxydes d'azote (NOx) émis dans les gaz de combustion du moteur, sans les transformer. Puis, de manière fréquentielle, par exemple lorsque la masse de NOx accumulée dans le piège atteint un seuil prédéterminé, un calculateur du moteur provoque une purge du piège, par un basculement du fonctionnement du moteur en mélange riche, généralement à une richesse voisine de 1,05. Alors, sous l'action des molécules réductrices de carburant envoyées à l'échappement du moteur et pénétrant dans le piège, les NOx stockés pendant la phase de fonctionnement en mélange pauvre sont réduits et transformés en molécules inoffensives qui sont rejetées dans l'atmosphère extérieure.

Le réglage du moteur en mélange riche est généralement obtenu en diminuant le débit d'air admis dans le moteur, par la fermeture d'une vanne d'admission d'air du moteur et/ou une modification de la position d'un actionneur associé à une turbine d'un turbocompresseur du moteur, et en modifiant la quantité et le phasage de l'injection de carburant, notamment par l'ajout d'une post-injection rapprochée de carburant. Il est également courant d'augmenter une proportion de gaz d'échappement à haute pression recyclés à l'admission du moteur, par exemple en ouvrant une vanne du circuit de recirculation desdits gaz.

Il est connu que, en raison du temps de réponse de chaque actionneur et de la longueur du parcours que l'air frais (et le cas échéant les gaz d'échappement) doit parcourir entre l'actionneur considéré sur lequel on agit et le moteur, il existe un certain retard entre le moment où on bascule le fonctionnement du moteur en mélange riche et le moment où ledit mélange arrive dans l'état souhaité à l'entrée du piège à oxydes d'azote pour pouvoir purger ce dernier. Par exemple, la durée de cette phase transitoire est de l'ordre de 2s.

Or, on sait par ailleurs qu'une purge ne peut se dérouler que si certaines conditions physiques relatives à des paramètres de fonctionnement du moteur et du véhicule sont remplies. De manière non limitative, une purge ne peut débuter et se poursuivre jusqu'à son terme normal, qui est l'épuisement des oxydes d'azote stockés dans le piège, que lorsque les conditions suivantes sont remplies :

- Le régime du moteur, le couple du moteur, et la vitesse du véhicule sont dans des plages prédéterminées de régime, de couple et de vitesse ; et,
- Le couple du moteur et la vitesse du véhicule sont assez stables, en d'autres termes, les dérivées du couple du moteur et de la vitesse du véhicule sont inférieures à des seuils prédéterminés.

Ces conditions dépendent essentiellement du parcours du véhicule et du comportement du conducteur du véhicule sur ce parcours et ne sont généralement ni maîtrisables, ni prévisibles. Dès que l'une au moins de ces conditions n'est plus remplie, la purge est interrompue. Il existe généralement un risque de purge incomplète, le temps moyen d'une purge complète pouvant être de l'ordre de 10s à la richesse 1,05.

Dans les procédés de purge connus, (voir DE 198 47 874 A1), en cas d'arrêt ou d'interruption de la purge d'un piège à oxydes d'azote, le moteur reprend son fonctionnement habituel en mélange pauvre jusqu'à ce qu'un nouveau besoin de purger le piège soit identifié, typiquement lorsque la masse de NOx stockée atteint à nouveau un seuil prédéterminé. Dans de tels procédés, il faut alors à nouveau procéder au réglage transitoire du moteur en mélange riche. En d'autres termes, chaque début de purge commence par une phase transitoire pendant laquelle les NOx ne sont pas encore traités, ce qui accroît le risque de purges interrompues précocement par la perte ultérieure des conditions de régime, de couple ou de vitesse.

On connaît aussi de l'état de la technique des procédés qui visent à prédisposer le réglage du moteur pour qu'une purge puisse être efficace sans délai lorsque de telles conditions non maîtrisables viennent à être réunies. Par exemple, la publication FR-A1-3029974 de la demanderesse divulgue un procédé de purge dans lequel, lorsqu'un besoin de purge du piège à oxydes d'azote est détecté, le réglage du moteur est modifié en retardant l'injection de carburant, de façon à amener puis à maintenir le piège à une température à laquelle la purge sera la plus efficace dès que les conditions de régime, de couple et de vitesse seront réunies. Cette prédisposition du piège à la bonne température ne permet néanmoins pas de traiter le problème de l'augmentation du risque de purges interrompues précocement qui est dû notamment à la durée du réglage transitoire du moteur en mélange riche.

RESUME DE L'INVENTION

L'invention propose de remédier aux défauts liés aux procédés de purge connus.

Elle propose pour cela un procédé de purge d'un piège à oxydes d'azote monté dans le circuit d'échappement d'un moteur à combustion interne, dans un dispositif de motorisation de véhicule automobile, ledit procédé comprenant :

- Une étape au cours de laquelle on détermine une masse courante d'oxydes d'azote dans le piège, pendant le fonctionnement du moteur en mélange pauvre ;
- Une étape au cours de laquelle on détecte un besoin de purge du piège, lorsque ladite masse atteint un seuil ;
- Une étape de réglage transitoire du moteur vers un réglage stabilisé en mélange riche, au cours de laquelle on diminue la quantité d'air et on augmente la quantité de carburant admises dans le moteur en commandant des mouvements d'actionneurs de la chaîne d'air et d'injecteurs de carburant du moteur ;
- Une étape de purge proprement dite du piège, au cours de laquelle ledit réglage stabilisé en mélange riche du moteur est appliqué, tant qu'un ensemble de conditions de fonctionnement du moteur et du véhicule permettant le déroulement de la purge est réuni ; et,
- Une étape d'interruption de la purge, lorsque lesdites conditions ne sont plus remplies.

Ledit procédé selon l'invention est caractérisé en ce qu'il comprend en outre, dans le cas où la durée de la purge, égale à la somme de la durée de ladite étape de réglage transitoire du moteur et de la durée de ladite étape de purge proprement dite jusqu'à son interruption, est inférieure à un premier seuil de durée de purge partielle prédéterminé :

- Une étape de réglage d'attente spécifique du moteur en mélange pauvre, dans laquelle on diminue la quantité de carburant admise dans le moteur, et on ne modifie pas la position des actionneurs de la chaîne d'air du moteur, par rapport au réglage stabilisé en mélange riche ; et,
- Une étape de retour du réglage du moteur dans son réglage stabilisé en mélange riche, lorsque les conditions de fonctionnement du moteur et du véhicule permettant le déroulement de la purge sont retrouvées.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 représente un exemple de dispositif de motorisation apte à la mise en oeuvre du procédé selon l'invention ; et,
- la figure 2 est un logigramme des étapes d'un mode de réalisation du procédé selon l'invention.

DESCRIPTION DETAILLEE DES FIGURES

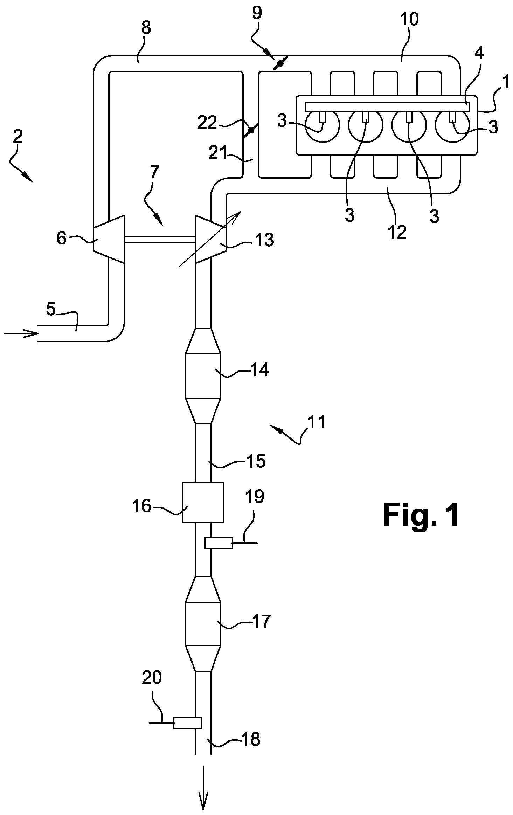

Sur la figure 1, on a représenté un dispositif de motorisation apte à la mise en oeuvre du procédé selon l'invention. Il comprend un moteur 1 à combustion interne, par exemple un moteur diesel de véhicule automobile, qui se présente ici sous la forme d'un moteur à quatre cylindres en ligne suralimenté. Le moteur 1 est alimenté en air par un circuit d'admission d'air 2, et en carburant, par exemple du gazole, par une pluralité d'injecteurs 3 montés sur une rampe commune 4 d'alimentation en carburant.

Le circuit d'admission d'air 2 comporte d'amont en aval, c'est-à-dire dans le sens de circulation de l'air, une conduite d'admission d'air 5, un compresseur 6 d'un turbocompresseur 7 du moteur 1, une conduite de liaison compresseur - collecteur d'admission 8, une vanne 9 de réglage de débit des gaz admis dans le moteur et un collecteur d'admission 10, ou répartiteur 10. Bien entendu, le circuit d'admission 2 peut comporter d'autres composants non représentés ici, par exemple un filtre à air, un refroidisseur d'air suralimenté, etc.

Le moteur 1 est aussi équipé d'un circuit d'échappement 11 des gaz d'échappement, comprenant d'amont en aval, c'est-à-dire dans le sens de circulation des gaz, un collecteur d'échappement 12, une turbine 13 du turbocompresseur 7, un pot catalytique 14 comportant par exemple un catalyseur d'oxydation 14 et/ou un filtre à particules 14, une conduite de liaison 15 pot catalytique - débitmètre, un débitmètre 16, un piège à oxydes d'azote 17 et une conduite d'échappement 18. Le piège à oxydes d'azote 17 est associé à des moyens de détermination d'une valeur représentative de la concentration en oxydes d'azote 19 à l'entrée du piège, par exemple un capteur d'oxydes d'azote amont 19 monté à l'entrée du piège, et des moyens de détermination d'une valeur représentative de la concentration d'oxydes d'azote 20 à la sortie du piège, par exemple un capteur d'oxydes d'azote aval 18, monté à la sortie du piège sur la conduite d'échappement 18.

La flèche représentée sur la turbine 13 signale qu'il s'agit d'une turbine dont les ailettes sont inclinables. En d'autres termes le turbocompresseur 7 se présente ici sous la forme d'un turbocompresseur 7 à géométrie variable. Bien entendu, dans une variante non représentée, le turbocompresseur 7 peut être un turbocompresseur à géométrie fixe, associé à un circuit de décharge à l'échappement (non représenté) équipé d'une vanne de décharge à l'échappement (également connue sous la dénomination de « waste gâte » en langue anglaise).

Le circuit d'échappement 11 comprend par ailleurs ici un circuit de recirculation partielle des gaz d'échappement à l'admission à haute pression 21, dit aussi circuit EGR HP (de l'acronyme en langue anglaise pour : Exhaust Gas Recycling). Il se présente sous la forme d'une conduite qui prend naissance en un point du circuit d'échappement 11 situé en amont de la turbine 13, ici entre le collecteur d'échappement 12 et la turbine 13. Son autre extrémité débouche en aval du compresseur 6, dans la conduite de liaison compresseur - collecteur d'admission 8. Il est équipé d'une vanne de recirculation partielle des gaz d'échappement à haute pression 22, dite aussi vanne EGR HP 22, dont le réglage permet d'ajuster la proportion de gaz recyclés à l'admission.

D'autres variantes de réalisation du dispositif de motorisation sont possibles sans nuire à la généralité de l'invention. Par exemple, le circuit d'échappement peut comporter en outre un circuit de recirculation des gaz d'échappement à basse pression associé à une vanne EGR à basse pression et/ou à une vanne des gaz d'échappement. Par exemple, le moteur peut être équipé d'un débitmètre à l'admission plutôt qu'à l'échappement, etc.

Le dispositif de motorisation comprend aussi des moyens de contrôle (non représentés), par exemple un calculateur électronique, apte à régler les paramètres de fonctionnement du dispositif de motorisation, notamment du moteur 1 et du piège à oxydes d'azote 17, en fonction notamment d'une consigne de couple correspondant à un enfoncement de la pédale d'accélérateur par le conducteur du véhicule et à un régime donné. De manière connue en soi, le calculateur règle l'admission d'air et la proportion de gaz d'échappement recyclés à l'admission, l'injection de carburant dans le moteur.

Par exemple, pour régler la quantité d'air admis, il peut agir sur la vanne de débit des gaz 9 et/ou sur l'inclinaison des ailettes de la turbine 13 du turbocompresseur à géométrie variable 7 (ou, en variante si la turbine est à géométrie fixe : sur l'ouverture d'une vanne de décharge à l'échappement du turbocompresseur). Pour régler la quantité des gaz d'échappement recyclés à l'admission, il peut agir sur la vanne EGR HP 22. Pour régler la quantité et le phasage de l'injection de carburant, il commande l'ouverture et la fermeture des injecteurs 3.

Le calculateur est apte à déterminer la quantité courante (massique) de NOx stockés dans le piège 17 et déclenche une purge du piège, par exemple lorsque ladite quantité courante atteint un seuil. Pour cela, il bascule le fonctionnement du moteur en mélange riche : par rapport au réglage nominal réalisé pendant le fonctionnement normal du moteur en mélange pauvre, il diminue la quantité d'air admise dans le moteur, par exemple en fermant la vanne de débit des gaz 9 et/ou en diminuant l'inclinaison des ailettes de la turbine 13 par rapport au flux des gaz d'échappement dd manière à offrir moins de résistance aux gaz ; il augmente la quantité de carburant admise dans le moteur, notamment en ajoutant une post-injection rapprochée de carburant aux différentes séquences d'injection déjà prévues lors du fonctionnement normal du moteur en mélange pauvre ; il peut augmenter la proportion de gaz d'échappement recyclés à l'admission en ouvrant la vanne EGR HP 22.

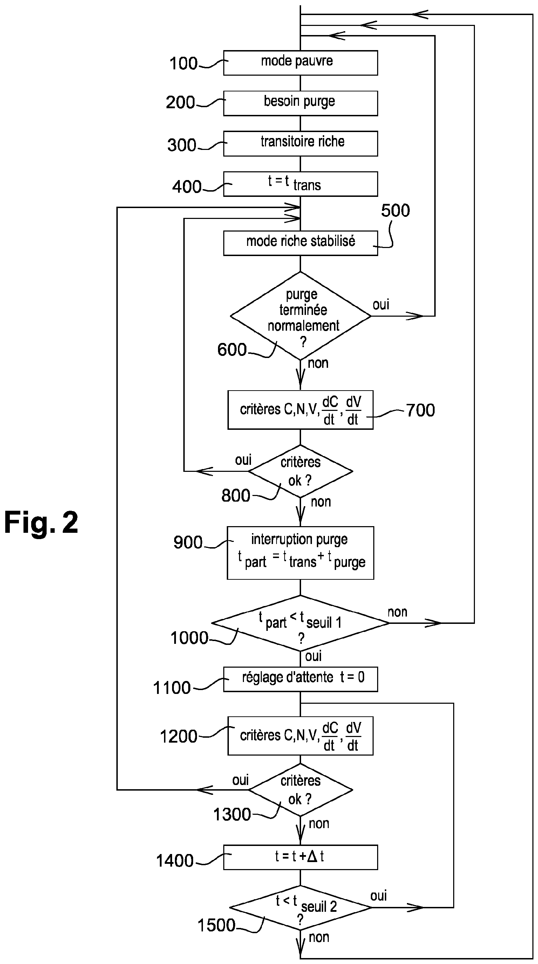

La figure 2 illustre un mode de réalisation du procédé selon l'invention.

Le procédé selon l'invention est itératif. Il débute par une étape 100 dans laquelle le moteur fonctionne normalement en mélange pauvre. Le calculateur règle la quantité d'air admise dans le moteur, la quantité de gaz d'échappement recyclés à l'admission et la quantité de carburant en fonction du point de fonctionnement courant du moteur (notamment : régime et charge), sur des valeurs nominales.

Le calculateur détermine la valeur du débit Qech des gaz d'échappement du moteur, par exemple grâce à l'indication du débitmètre 16. Il détermine aussi une valeur de concentration en oxydes d'azote $[NOx]_{in}$ entrant dans le piège 17, et une valeur de concentration en oxydes d'azote $[NOx]_{out}$ sortant du piège 17. Par exemple, la concentration entrante peut provenir du capteur d'oxydes d'azote amont 19 ou d'un modèle, et la concentration sortante peut être déterminée par le capteur d'oxydes d'azote aval 20. Il détermine la masse courante d'oxydes d'azote $M_{NOx}$ stockée dans le piège depuis le début de sa phase de fonctionnement en mélange pauvre, c'est-à-dire depuis la fin de la dernière purge du piège. Par exemple, il peut procéder à un calcul selon l'équation suivante :

$$\text{(Equ.1)} \qquad M_{NOx} = \int Q_{ech} * ( [NOx]_{in} - [NOx]_{out} ) * dt$$

A l'étape 200, le calculateur identifie un besoin de purger le piège 17, par exemple lorsque la masse de NOx calculée précédemment atteint un seuil prédéterminé.

A l'étape suivante 300, le calculateur bascule le fonctionnement du moteur en mélange riche. Par exemple, il diminue la consigne de quantité d'air admise dans le moteur ; il augmente la consigne de quantité de carburant injectée dans le moteur ; il peut aussi augmenter la consigne de proportion de gaz d'échappement recyclés à l'admission du moteur. Par exemple, ces consignes sont prédéterminées au préalable au banc moteur en fonction du point de fonctionnement du moteur (régime et charge notamment) pour qu'en mode de fonctionnement stationnaire, c'est-à-dire une fois que les valeurs réelles desdites quantités ont rejoint lesdites consignes, le moteur délivre bien le couple requis au régime requis, tout en fonctionnant à la valeur de richesse nécessaire à la purge du piège.

Lesdites consignes sont elles-mêmes transformées en consignes de position de la vanne de débit des gaz 9 et/ou de position des ailettes de la turbine 13, en consigne de temps d'injection des injecteurs 3 et éventuellement en consigne de position de la vanne EGR HP 22. Ces changements de consigne sont sensiblement instantanés. Le calculateur initialise un compteur de temps à la valeur t=0s lorsque ces nouvelles consignes sont appliquées.

En revanche, en raison du temps nécessaire aux différents actionneurs pour atteindre leurs consignes respectives depuis leurs positions nominales, plus particulièrement en ce qui concerne les actionneurs de la chaîne d'air du moteur (vanne de débit des gaz 9, turbine 13 et vanne EGR HP 22), et en outre en raison du temps nécessaire à l'air et aux gaz recyclés pour parcourir les distances respectives entre les actionneurs considérés et le moteur, le réglage du moteur en mélange riche sur son point de fonctionnement défini par lesdites consignes n'est pas instantané. Il existe une phase transitoire d'une durée transitoire donnée $t_{trans.}$, qui peut atteindre par exemple 2s.

De manière optionnelle, le procédé peut comporter une étape 400 dans laquelle la durée transitoire est déterminée. Par exemple, elle peut être mesurée au préalable au banc moteur pour différents points de fonctionnement du moteur. Le compteur de temps continue ensuite d'être incrémenté.

A l'étape 500, le réglage stabilisé en mélange riche du moteur est appliqué. On entend par réglage stabilisé le fait que les positions réelles des actionneurs ont rejoint leurs positions de consigne et que l'air et le gaz d'échappement recyclé à l'admission ont parcouru les distances respectives entre les actionneurs considérés et le piège à oxydes d'azote.

A l'étape 600, le calculateur du moteur vérifie si la purge du piège est terminée normalement. On entend par là que le piège est entièrement vidé du stock de NOx qu'il contenait. Pour effectuer cette vérification, le calculateur peut par exemple, de manière connue, surveiller l'évolution des signaux des capteurs d'oxydes d'azote amont 19 et aval 20 et constater que la valeur indiquée par la sonde aval rejoint la valeur indiquée par la sonde amont.

A l'étape 700, le calculateur relève un ensemble de paramètres autorisant le début ou la poursuite d'une purge de piège à oxydes, comprenant au moins le couple C du moteur, le régime N du moteur et la vitesse du véhicule V, et il calcule aussi une valeur de la dérivée du couple dC/dt et de la dérivée de la vitesse dV/dt.

A l'étape 800, le calculateur vérifie si les valeurs de couple C, de régime N et de vitesse V sont respectivement dans des plages de couple, de régime N et de vitesse V prédéterminées. Il vérifie aussi si le couple C et la vitesse V sont assez stables, ce qui se traduit par le fait que la dérivée du couple dC/dt et la dérivée de la vitesse dV/dt sont inférieurs à des seuils respectifs prédéterminés.

Si toutes les conditions sont remplies simultanément, le procédé reprend à l'étape 500, c'est-à-dire que le mode de réglage stabilisé en mélange riche est appliqué, ou continue de l'être. Le compteur temporel continue d'être incrémenté. Dans le cas contraire, c'est-à-dire si au moins l'une des conditions précédentes vient à ne pas être remplie, alors le procédé oriente vers l'étape 900 dans laquelle la purge est interrompue. A cet instant, on relève la durée $t_{part}$ de la purge. Il s'agit de la durée d'une purge partielle $t_{part}$, dans la mesure où la purge n'a toujours pas été terminée normalement à l'étape 600.

Cette durée de purge partielle $t_{part}$ est égale à la somme de la durée transitoire $t_{trans}$ et de la durée de la purge proprement dite $t_{purge}$. Dans le cas où on a déterminé la durée transitoire à l'étape 500, on peut déduire la durée de la purge proprement dite.

A l'étape 1000, le calculateur compare la durée de purge partielle $t_{part}$ à un premier seuil de durée de purge partielle $t_{seuil1}$ prédéterminé. Ce seuil correspond par exemple à la durée d'une purge partielle dont l'efficacité est jugée minimale, par exemple une purge qui élimine au moins la moitié des NOx stockés dans le piège. Par exemple, une valeur de 4s peut être retenue, correspondant à environ 2s de durée transitoire et 2s de purge proprement dite.

Dans le cas où on a déterminé plus précisément la valeur de la durée transitoire $t_{trans}$, on peut en variante comparer à l'étape 1000 la valeur de la purge proprement dite $t_{purge}$ à un seuil spécifique.

Si la durée de la purge partielle t n'est pas inférieure au premier seuil de durée de purge partielle, c'est-à-dire si la purge a présenté une efficacité minimale, alors la purge est terminée et le procédé reprend à l'étape 100 dans laquelle le réglage du moteur est de nouveau réalisé en mélange pauvre. Le calculateur commande alors un réglage du moteur qui reprend les positions nominales des actionneurs pour le point de fonctionnement considéré, c'est-à-dire les positions des actionneurs qui étaient celles du moteur avant son basculement en mode riche. La vanne de réglage de débit des gaz 9 reprend une position plus ouverte et/ou les ailettes de la turbine 13 une position qui offre plus de résistance au flux des gaz d'échappement ; on supprime la post-injection rapprochée de carburant qui avait été ajoutée ; on referme le cas échéant la vanne EGR HP 22.

Dans le cas contraire, le procédé oriente vers une étape 1100 dans laquelle le réglage du moteur est modifié de manière à adopter un réglage dit réglage d'attente ou réglage inter-purge. Plus précisément, le moteur ne revient pas au mode de réglage nominal de l'étape 100 en mélange pauvre, mais il adopte un autre réglage, spécifique, en mélange pauvre, ne provoquant pas d'afflux de carburant sur le piège 17, dans lequel on conserve toutes les positions des actionneurs de la chaîne d'air (notamment : vanne de réglage du débit des gaz 9 ; ailettes de la turbine 13 ; vanne EGR HP 22) de l'étape 500, et on supprime la post-injection rapprochée de carburant. On initialise un compteur de temps à t=0s lorsque le réglage d'attente commence à être appliqué.

De cette manière, on prédispose le moteur pour que, dès que les conditions d'entrée ou de poursuite de la purge sont à nouveau réunies, une telle purge puisse reprendre immédiatement sans qu'il soit besoin de prendre en compte le temps de réponse des actionneurs de la chaîne d'air. Il suffit alors d'agir sur les injecteurs pour rétablir la post-injection rapprochée de carburant, ce qui est sensiblement instantané.

A l'étape 1200, le calculateur détermine donc les paramètres identiques à ceux de l'étape 700. A l'étape 1300, le calculateur vérifie comme à l'étape 800 si les valeurs desdits paramètres sont dans les mêmes plages ou inférieures aux mêmes seuils.

Si toutes les conditions sont remplies, le procédé oriente vers l'étape 500 dans lequel le réglage en mélange riche est appliqué. Dans le cas contraire, on incrémente à l'étape 1400 le compteur de temps. Puis à l'étape de test 1500, on vérifie si la durée t qui s'est écoulée depuis l'application du réglage d'attente est inférieure à un second seuil de durée $t_{seuil2}$, par exemple 5s. Si tel est le cas, le procédé reprend à l'étape 1200. Dans le cas contraire, le procédé oriente vers l'étape 100.

On comprend de ce qui précède que le réglage d'attente du moteur est appliqué pendant une durée limitée au deuxième seuil de durée $t_{seuil2}$. Si pendant cette durée maximale les conditions d'une nouvelle entrée en purge ne sont pas réunies, alors on met un terme à ce réglage d'attente et on règle à nouveau le moteur dans son mode nominal en mélange pauvre. Il n'est en effet pas souhaitable de prolonger indéfiniment le réglage d'attente, qui est un mode dégradé de réglage du moteur, notamment un réglage dans lequel le rendement de combustion est moins bon que le réglage en mélange pauvre nominal, et donc entraînerait une surconsommation de carburant lors du fonctionnement habituel du moteur.

## Revendications

1. Procédé de purge d'un piège à oxydes d'azote (17) monté dans le circuit d'échappement d'un moteur à combustion interne (1), dans un dispositif de motorisation de véhicule automobile, ledit procédé comprenant :

   - une étape (100) au cours de laquelle on détermine une masse courante d'oxydes d'azote ($M_{NOX}$) dans le piège, pendant le fonctionnement du moteur en mélange pauvre ;
   - une étape (200) au cours de laquelle on détecte un besoin de purge du piège (17), lorsque ladite masse atteint un seuil ;
   - une étape (300) de réglage transitoire du moteur vers un réglage stabilisé en mélange riche stabilisé, au cours de laquelle on diminue la quantité d'air et on augmente la quantité de carburant admises dans le moteur en commandant des mouvements d'actionneurs de la chaîne d'air et d'injecteurs de carburant du moteur ;
   - une étape (500) de purge proprement dite du piège, au cours de laquelle ledit réglage stabilisé en mélange riche du moteur est appliqué, tant qu'un ensemble de conditions de fonctionnement du moteur et du véhicule (N,C,V,dC/dt,dV/dt) permettant le déroulement de la purge est réuni ; et,
   - une étape (700) d'interruption de la purge, lorsque lesdites conditions ne sont plus remplies,
   **CARACTERISE EN CE QU'**

   il comprend en outre, dans le cas où la durée de purge ($t_{part}$), égale à la somme de la durée de ladite étape de réglage transitoire ($t_{trans}$) du moteur et de la durée de ladite étape de purge proprement dite ($t_{purge}$) jusqu'à son interruption, est inférieure à un premier seuil de durée de purge partielle ($t_{seuil1}$) prédéterminé :

   - une étape (1100) de réglage d'attente spécifique du moteur en mélange pauvre, dans laquelle on diminue la quantité de carburant admise dans le moteur, et on ne modifie pas la position des actionneurs de la chaîne d'air du moteur, par rapport au réglage stabilisé en mélange riche ; et,

- une étape (500) de retour du réglage du moteur dans son réglage stabilisé en mélange riche, lorsque les conditions de fonctionnement du moteur et du véhicule (N,C,V,dC/dt,dV/dt) permettant le déroulement de la purge sont retrouvées.

2. Procédé de purge selon la revendication 1, **caractérisé en ce que** le réglage d'attente spécifique du moteur est appliqué une durée limitée à un deuxième seuil de durée ($t_{seuil2}$).

3. Procédé selon l'une des revendications précédentes, dans lequel l'ensemble de conditions de fonctionnement du moteur et du véhicule permettant le déroulement de la purge comporte au moins :

   - Le couple (C) du moteur, le régime (N) du moteur (N) et la vitesse (V) du véhicule sont dans des plages prédéterminées ; et,
   - La dérivée du couple (dC/dt) et la dérivée de la vitesse (dV/dt) sont inférieures à des seuils prédéterminés.

4. Procédé de purge selon l'une quelconque des revendications précédentes, dans lequel la durée du premier seuil ($t_{seuil1}$) est comprise entre 3 et 5 secondes, et de préférence sensiblement égale à 4 secondes.

5. Procédé de purge selon l'une quelconque des revendications précédentes, dans lequel la durée du deuxième seuil ($t_{seuil2}$) est comprise entre 4 et 6 secondes, et de préférence sensiblement égale à 5 secondes.

6. Procédé de purge selon l'une quelconque des revendications précédentes, dans lequel pour régler le moteur en mélange riche, on augmente la quantité de carburant en ajoutant une post-injection rapprochée de carburant.

7. Procédé de purge selon l'une quelconque des revendications précédentes, dans lequel pour régler le moteur en mélange riche, on diminue la quantité d'air en agissant sur une vanne (9) de réglage de débit des gaz d'admission du moteur et/ou sur un actionneur associé à une turbine (13) d'un turbocompresseur du moteur.

8. Procédé de purge selon l'une quelconque des revendications précédentes, dans lequel pour régler le moteur en mélange riche, on augmente en outre une proportion de gaz d'échappement recyclés à l'échappement en agissant sur une vanne (22) de recirculation partielle, le réglage d'attente spécifique du moteur ne modifiant pas la position de ladite vanne (22) de recirculation partielle par rapport au réglage stabilisé en mélange riche.


**Patentansprüche**

1. Verfahren zur Regeneration einer Stickoxidfalle (17), die in den Abgasstrang eines Verbrennungsmotors (1) eingebaut ist, in einer Kraftfahrzeug-Motorisierungsvorrichtung, das Verfahren umfassend:

   - einen Schritt (100), in dessen Verlauf während des Betriebs des Motors mit armem Gemisch eine aktuelle Stickstoffmasse ($M_{NOX}$) in der Falle bestimmt wird;
   - einen Schritt (200), in dessen Verlauf ein Regenerationsbedarf der Falle (17) festgestellt wird, wenn die Masse eine Schwelle erreicht;
   - einen Schritt (300) des transitorischen Regelns des Motors auf eine stabilisierte Regelung mit stabilisiertem reichem Gemisch, in dessen Verlauf die Luftmenge verringert und die Kraftstoffmenge erhöht wird, die in den Motor eingelassen werden, durch Steuerung von Bewegungen von Aktoren der Luftkette und von Kraftstoffeinspritzdüsen des Motors;
   - einen Schritt (500) des eigentlichen Regenerierens der Falle, in dessen Verlauf die stabilisierte Regelung mit reichem Gemisch des Motors angewandt wird, solange eine Menge von Betriebsbedingungen des Motors und des Fahrzeugs (N,C,V,dC/dt,dV/dt), die den Ablauf der Regeneration gestatten, gegeben ist; und,
   - einen Schritt (700) des Unterbrechens der Regeneration, wenn die Bedingungen nicht mehr erfüllt sind,

   **dadurch gekennzeichnet, dass**
   es ferner in dem Fall, dass die Regenerationsdauer ($t_{part}$), die gleich der Summe der Dauer des Schritts des tran-sitorischen Regelns ($t_{trans}$) des Motors und der Dauer des Schritts des eigentlichen Regenerierens ($t_{Regen}$) bis zu dessen Unterbrechung ist, kleiner als eine erste vorbestimmte Schwelle einer Teilregenerationsdauer ($t_{Schwelle1}$) ist, Folgendes umfasst:

   - einen Schritt (1100) der spezifischen Warteregelung des Motors mit armem Gemisch, wobei die Kraftstoffmenge, die in den Motor eingelassen wird, verringert wird und die Position der Aktoren der Luftkette des Motors im Verhältnis zur stabilisierten Regelung mit reichem Gemisch nicht verändert wird; und,
- einen Schritt (500) des Zurückkehrens der Regelung des Motors zu dessen stabilisierten Regelung mit reichem Gemisch, wenn die Betriebsbedingungen des Motors und des Fahrzeugs (N,C,V,dC/dt,dV/dt), die den Ablauf der Regeneration gestatten, wieder gegeben sind.

2. Regenerationsverfahren nach Anspruch 1, **dadurch gekennzeichnet, dass** die spezifische Warteregelung des Motors für eine Dauer angewandt wird, die auf eine zweite Dauerschwelle ($t_{Schwelle2}$) begrenzt ist.

3. Verfahren nach einem der vorhergehenden Ansprüche, wobei die Menge von Betriebsbedingungen des Motors und des Fahrzeugs, die den Ablauf der Regeneration gestatten, wenigstens Folgendes aufweist:

   - Das Drehmoment (C) des Motors, die Drehzahl (N) des Motors (N) und die Geschwindigkeit (V) des Fahrzeugs liegen innerhalb vorbestimmter Bereiche; und,
   - Die Ableitung des Drehmoments (dC/dt) und die Ableitung der Geschwindigkeit (dV/dt) sind kleiner als vorbestimmte Schwellen.

4. Regenerationsverfahren nach einem der vorhergehenden Ansprüche, wobei die Dauer der ersten Schwelle ($t_{Schwelle1}$) zwischen 3 und 5 Sekunden liegt und vorzugsweise im Wesentlichen gleich 4 Sekunden ist.

5. Regenerationsverfahren nach einem der vorhergehenden Ansprüche, wobei die Dauer der zweiten Schwelle ($t_{Schwelle2}$) zwischen 4 und 6 Sekunden liegt und vorzugsweise im Wesentlichen gleich 5 Sekunden ist.

6. Regenerationsverfahren nach einem der vorhergehenden Ansprüche, wobei zur Regelung des Motors auf reiches Gemisch die Kraftstoffmenge erhöht wird, indem eine angenäherte Kraftstoff-Nacheinspritzung hinzugefügt wird.

7. Regenerationsverfahren nach einem der vorhergehenden Ansprüche, wobei zur Regelung des Motors auf reiches Gemisch die Luftmenge durch Einwirkung auf ein Ventil (9) zur Regelung des Durchsatzes der Einlassgase des Motors und/oder auf einen Aktor, der einer Turbine (13) eines Turboladers des Motors zugeordnet ist, verringert wird.

8. Regenerationsverfahren nach einem der vorhergehenden Ansprüche, wobei zur Regelung des Motors auf reiches Gemisch ferner ein Anteil von Abgasen erhöht wird, die am Auslass rückgeführt werden, indem auf ein Teilrückführventil (22) eingewirkt wird, wobei die spezifische Warteregelung des Motors die Position des Teilrückführventils (22) im Verhältnis zur stabilisierten Regelung mit reichem Gemisch nicht verändert.

**Claims**

1. Method for purging a nitrogen oxides trap (17) mounted in the exhaust circuit of an internal combustion engine (1), in a motor vehicle drive device, said method comprising:

   - a step (100) during which a current mass of nitrogen oxides ($M_{NOX}$) in the trap is determined, while the engine is running with a lean mixture;
   - a step (200) during which a need to purge the trap (17) is detected, when said mass reaches a threshold value;
   - a step (300) of transiently regulating the engine towards a steady-state setting with a steady-state rich mixture, during which step the quantity of air is decreased and the quantity of fuel admitted into the engine is increased by commanding movements of actuators in the engine air and fuel injector lines;
   - a step (500) of actually purging the trap, during which step said engine rich-mixture steady-state setting is applied, for as long as a set of engine and vehicle operating conditions (N,C,V,dC/dt,dV/dt) that allow the purge to take place remain satisfied; and
   - a step (700) of interrupting the purge when the said conditions are no longer satisfied,
   **CHARACTERIZED IN THAT**

   it further comprises, in the event that the purged duration ($t_{part}$), equal to the sum of the duration of the said step of transient regulation ($t_{trans}$) of the engine and of the duration of the actual purging step ($t_{purge}$) up to the point at which it is interrupted, is below a predetermined first partial-purge duration threshold value ($t_{seuil1}$) :

   - a step (1100) in which the engine adopts a specific lean-mixture pending setting, in which the quantity of fuel admitted to the engine is decreased but the position of the actuators in the engine air line is not modified in comparison with the rich-mixture steady-state setting; and
- a step (500) of returning the engine setting to its rich-mixture steady-state setting when the engine and vehicle operating conditions (N,C,V,dC/dt,dV/dt) that allow the purge to take place are regained.

2. Purge method according to Claim 1, **characterized in that** the engine specific pending setting is applied for a duration limited to a second threshold duration ($t_{seuil2}$).

3. Method according to one of the preceding claims, wherein the set of engine and vehicle operating conditions that allow the purge to take place include at least:

   - the engine torque (C), the speed (N) of the engine (N) and the vehicle speed (V) are within predetermined ranges; and
   - the derivative of the torque (dC/dt) and the derivative of the speed (dV/dt) are below predetermined threshold values.

4. Purge method according to any one of the preceding claims, wherein the duration of the first threshold value ($t_{seuil1}$) is comprised between 3 and 5 seconds, and is preferably substantially equal to 4 seconds.

5. Purge method according to any one of the preceding claims, wherein the duration for the second threshold value ($t_{seuil2}$) is comprised between 4 and 6 seconds and is preferably substantially equal to 5 seconds.

6. Purge method according to any one of the preceding claims, wherein in order to set a rich mixture for the engine, the quantity of fuel is increased by adding a close post-injection of fuel.

7. Purge method according to any one of the preceding claims, wherein, in order to set a rich mixture for the engine, the quantity of air is decreased by acting on a valve (9) that regulates the flow rate of the engine intake gases and/or on an actuator associated with a turbine (13) of a turbocharger of the engine.

8. Purge method according to any one of the preceding claims, wherein, in order to set a rich mixture for the engine, a proportion of exhaust gases recirculated to the exhaust by acting on a partial-recirculation valve (22) is furthermore increased, the engine specific pending setting not modifying the position of the said partial-recirculation valve (22) compared with the rich-mixture steady-state setting.

**Fig. 1**

**Fig. 2**

100 — mode pauvre

200 — besoin purge

300 — transitoire riche

400 — $t = t_{trans}$

500 — mode riche stabilisé

600 — purge terminée normalement ? — oui →

non ↓

700 — critères $C, N, V, \dfrac{dC}{dt}, \dfrac{dV}{dt}$

800 — critères ok ? — oui ←

non ↓

900 — interruption purge $t_{part} = t_{trans} + t_{purge}$

1000 — $t_{part} < t_{seuil\,1}$ ? — non →

oui ↓

1100 — réglage d'attente $t = 0$

1200 — critères $C, N, V, \dfrac{dC}{dt}, \dfrac{dV}{dt}$

1300 — critères ok ? — oui ←

non ↓

1400 — $t = t + \Delta t$

1500 — $t < t_{seuil\,2}$ ? — oui →

non ↓

**EP 3 330 521 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 19847874 A1

- FR 3029974 A1